# EUROPEAN PATENT APPLICATION

(11) **EP 4 358 360 A1**
(43) Date of publication of application: **24.04.2024**
(21) Application number: 23199999.6
(22) Date of filing: 27.09.2023
(51) Int. Cl.: H02J 9/06, H02M 3/338

(54) **POWER DISTRIBUTION CIRCUIT OF UNINTERRUPTIBLE POWER SUPPLY AND POWER SUPPLY SYSTEM**

(30) Priority: 20.10.2022 CN 202211291883
(71) Applicant: Huawei Digital Power Technologies Co., Ltd., Shenzhen, Guangdong 518043 (CN)
(72) Inventor: ZHANG, Hejun, Shenzhen, Guangdong (CN); LIU, Peiguo, Shenzhen, Guangdong (CN); YOU, Ziyi, Shenzhen, Guangdong (CN); LU, Maoyong, Shenzhen, Guangdong (CN)
(74) Representative: Maiwald GmbH

(57) **Abstract**

A power distribution circuit of an uninterruptible power supply is provided, where a first port of the power distribution circuit of the uninterruptible power supply is electrically connected to a second port. A third port is electrically connected to the second port by using a compensation circuit. When an input voltage of the first port is less than a rated voltage of a load of the second port, an input voltage of the third port is input to the compensation circuit. The compensation circuit converts a direct current into an alternating current, so that the alternating current output by the compensation circuit and the input voltage of the first port jointly supply power to the load of the second port. Compared with an existing power distribution circuit of the uninterruptible power supply, no power frequency transformer needs to be configured, so that a size of the power distribution circuit of the uninterruptible power supply can be reduced.

## Description

### TECHNICAL FIELD

This application relates to the field of power electronics technologies, and in particular, to a power distribution circuit of an uninterruptible power supply and a power supply system.

### BACKGROUND

An electrical device, such as a data center, an outdoor cabinet, or a base station, is usually connected to a power supply by using a power distribution circuit of an uninterruptible power supply (uninterruptible power supply, UPS). The power distribution circuit of the UPS may supply an alternating current of a mains system to the electrical device. However, when a voltage of the alternating current of the mains system is less than a rated voltage of the electrical device, it is difficult for the power distribution circuit of the UPS to configure the rated voltage for the electrical device. Consequently, the electrical device cannot work normally.

### SUMMARY

To resolve the foregoing problem, embodiments of this application provide a power distribution circuit of a UPS and a power supply system, where a first port is electrically connected to a second port. A compensation circuit is connected in series between a third port and the second port. When an input voltage of the first port is less than a rated voltage of a load of the second port, an input voltage of the third port is input to the compensation circuit. The compensation circuit converts a direct current into an alternating current, so that the alternating current output by the compensation circuit and the input voltage of the first port jointly supply power to the load of the second port. Compared with an existing power distribution circuit of the UPS, a transformer is not required, so that a size of the power distribution circuit of the UPS can be reduced. A converting circuit is further connected in series between the third port and the second port. An alternating current of the first port may be output as a direct current by using the converting circuit, to provide the direct current for a battery module of the third port. When the alternating current of the first port is abnormal, the direct current of the third port may be output as the alternating current by using the converting circuit, to provide the alternating current for the load of the second port. The converting circuit is configured in the power distribution circuit of the UPS, so that a function of the power distribution circuit of the UPS may be added, and an application scenario of the power distribution circuit of the UPS may be added.

Therefore, the following technical solutions are used in embodiments of this application.

According to a first aspect, an embodiment of this application provides a power distribution circuit of an uninterruptible power supply, including: a first port, coupled to an alternating current power supply, and configured to receive an alternating current; a second port, coupled to a load, and configured to supply power to the load; a third port, coupled to a direct current power supply, and configured to input and/or output a direct current; a switch circuit, coupled between the first port and the second port, and configured to control the first port to output the alternating current to the second port; a compensation circuit, coupled between the third port and the switch circuit, and configured to: when a voltage of the alternating current input by the first port is less than a rated voltage of the load of the second port, convert the direct current input by the third port into an alternating current, and provide a compensation voltage for the load of the second port; and a converting circuit, coupled between the third port and the second port, and configured to: convert the direct current input by the third port into an alternating current with a specified voltage, and provide the alternating current for the load of the second port; and/or convert the alternating current input by the first port into a direct current with a specified voltage, and provide the direct current for the direct current power supply of the third port.

In this implementation, the first port is electrically connected to the second port. The third port is electrically connected to the second port by using the compensation circuit. When the input voltage of the first port is less than the rated voltage of the load of the second port, an input voltage of the third port is input to the compensation circuit. The compensation circuit converts the direct current into the alternating current, so that the alternating current output by the compensation circuit and the input voltage of the first port jointly supply power to the load of the second port. Compared with an existing power distribution circuit of the uninterruptible power supply, no power frequency transformer needs to be configured, so that a size of the power distribution circuit of the uninterruptible power supply can be reduced.

A converting circuit is connected in series between the third port and the second port. The alternating current of the first port may be output as the direct current by using the converting circuit, to provide the direct current for a battery module of the third port. When the alternating current of the first port is abnormal, the direct current of the third port may be output as the alternating current by using the converting circuit, to provide the alternating current for the load of the second port. The converting circuit is configured in the power distribution circuit of the uninterruptible power supply, so that a function of the power distribution circuit of the uninterruptible power supply may be added, and an application scenario of the power distribution circuit of the uninterruptible power supply may be added.

In an implementation, the compensation circuit includes a first switch, a second switch, a third switch, a fourth switch, a first inductor, and a first capacitor, where the first switch and the second switch are connected in series on a branch, the third switch and the fourth switch are connected in series on a branch, and the branch on which the first switch and the second switch are located and the branch on which the third switch and the fourth switch are located are connected in parallel on two terminals of the third port; and a node between the first switch and the second switch is coupled to one terminal of the switch circuit by using the first inductor, a node between the third switch and the fourth switch is coupled to the other terminal of the switch circuit, and the first capacitor is electrically connected to two terminals of the switch circuit.

In an implementation, the converting circuit includes an LLC bidirectional converting circuit and an inverter/rectifier circuit, where one terminal of the LLC bidirectional converting circuit is coupled to the third port, and the other terminal is coupled to one terminal of the inverter/rectifier circuit, and the LLC bidirectional converting circuit is configured to convert a direct current into a direct current with a specified voltage; and the other terminal of the inverter/rectifier circuit is coupled to the second port, and the inverter/rectifier circuit is configured to perform conversion between a direct current and an alternating current.

In this implementation, the LLC bidirectional converting circuit converts the direct current into the alternating current, then converts the alternating current into the direct current, and then may output an alternating current or a direct current with a specified voltage with reference to the inverter/rectifier circuit, so that a voltage output by the converting circuit may supply power to the load of the second port or the battery module of the third port.

In an implementation, the LLC bidirectional converting circuit includes: a fifth switch, a sixth switch, a seventh switch, an eighth switch, a ninth switch, a tenth switch, a transformer, a second capacitor, a third capacitor, a fourth capacitor, and a second inductor, where the fifth switch and the sixth switch are connected in series on a branch, the seventh switch and the eighth switch are connected in series on a branch, and the branch on which the fifth switch and the sixth switch are located and the branch on which the seventh switch and the eighth switch are located are connected in parallel; a node between the fifth switch and the sixth switch is coupled to one port of a primary-side winding of the transformer, and a node between the seventh switch and the eighth switch is coupled to the other port of the primary-side winding of the transformer; the ninth switch and the tenth switch are connected in series on a branch, the third capacitor and the fourth capacitor are connected in series on a branch, and the branch on which the ninth switch and the tenth switch are located and the branch on which the third capacitor and the fourth capacitor are located are connected in parallel; and a node between the ninth switch and the tenth switch is coupled to one port of a secondary-side winding of the transformer by using the second capacitor and the second inductor in sequence; and a node between the third capacitor and the fourth capacitor is coupled to the other port of the secondary-side winding of the transformer.

In an implementation, the inverter/rectifier circuit includes: an eleventh switch, a twelfth switch, a thirteenth switch, a fourteenth switch, a third inductor, and a fifth capacitor, where the eleventh switch and the twelfth switch are connected in series on a branch, the thirteenth switch and the fourteenth switch are connected in series on a branch, and the branch on which the eleventh switch and the twelfth switch are located and the branch on which the thirteenth switch and the fourteenth switch are located are connected in parallel; and a node between the eleventh switch and the twelfth switch is coupled to one port of the second port by using the third inductor, a node between the thirteenth switch and the fourteenth switch is coupled to the other port of the second port, and the fifth capacitor is electrically connected between the node between the thirteenth switch and the fourteenth switch and the third inductor.

In an implementation, the compensation voltage is a difference between the rated voltage of the load of the second port and the voltage of the alternating current input by the first port.

In an implementation, the power distribution circuit of the uninterruptible power supply further includes a plurality of electromagnetic compatibility circuits, and the plurality of electromagnetic compatibility circuits are respectively coupled to the first port, the second port, and the third port, and are configured to isolate an electromagnetic signal between the power distribution circuit of the uninterruptible power supply and another circuit or device.

In this implementation, the first port, the second port, and the third port are each connected to an electromagnetic compatibility circuit, to isolate interference from an electromagnetic signal of another circuit to the power distribution circuit of the uninterruptible power supply, and isolate interference from an electromagnetic signal of the power distribution circuit of the uninterruptible power supply to another circuit, thereby adding an application scenario of the power distribution circuit of the uninterruptible power supply.

In an implementation, the third port is further coupled to the load, and is configured to supply power to the load.

In this implementation, a connection interface is disposed on the third port, so that the third port may be electrically connected to the load. The alternating current input by the first port may be converted by using the converting circuit, and then input to the load, so that the power distribution circuit of the uninterruptible power supply can supply power to the load, thereby adding an application scenario of the power distribution circuit of the uninterruptible power supply.

In an implementation, the power distribution circuit of the uninterruptible power supply further includes a control unit, where the control unit is electrically connected to the switch circuit, the compensation circuit, and the converting circuit, and is configured to: detect a state of the switch circuit; and send a first control signal to the converting circuit when the switch circuit is in a first state, where the first state is a state in which the switch circuit enables the first port to be connected to the second port, and the first control signal indicates the converting circuit to convert the alternating current input by the first port into the direct current.

In an implementation, the power distribution circuit of the uninterruptible power supply further includes the control unit, where the control unit is further configured to send a second control signal to the compensation circuit when the voltage of the alternating current input by the first port is less than the rated voltage of the load of the second port, where the second control signal indicates the compensation circuit to convert the direct current input by the third port into the alternating current.

In an implementation, the power distribution circuit of the uninterruptible power supply further includes the control unit, where the control unit is further configured to send a third control signal to the converting circuit when the switch circuit is in a second state, where the second state is a state in which the switch circuit enables the first port to be disconnected from the second port, and the third control signal indicates the converting circuit to convert the direct current input by the third port into the alternating current.

According to a second aspect, an embodiment of this application provides a power supply system, including: at least one power distribution circuit of the uninterruptible power supply according to the possible implementations of the first aspect, an alternating current power supply, coupled to the first port in the power distribution circuit of the uninterruptible power supply, and configured to provide an alternating current; a direct current power supply, coupled to the third port in the power distribution circuit of the uninterruptible power supply, and configured to provide a direct current or receive a direct current; and at least one load, coupled to the second port of the power distribution circuit of the uninterruptible power supply, and configured to receive an alternating current.

### BRIEF DESCRIPTION OF DRAWINGS

The following briefly describes the accompanying drawings that need to be used in the descriptions of embodiments or the conventional technology.
FIG. 1 is a schematic diagram of a circuit structure of a power distribution circuit of a UPS in the conventional technology;
FIG. 2 is a schematic diagram of an architecture of a power distribution circuit of a UPS according to an embodiment of this application;
FIG. 3 is a schematic diagram of a circuit structure of a power distribution circuit of a UPS according to an embodiment of this application;
FIG. 4 is a schematic diagram of a working mode of a power distribution circuit of a UPS according to an embodiment of this application;
FIG. 5 is a schematic diagram of a working mode of a power distribution circuit of a UPS according to an embodiment of this application;
FIG. 6 is a schematic diagram of a working mode of a power distribution circuit of a UPS according to an embodiment of this application;
FIG. 7 is a schematic diagram of a working mode of a power distribution circuit of a UPS according to an embodiment of this application; and
FIG. 8 is a schematic diagram of a working mode of a power distribution circuit of a UPS according to an embodiment of this application.

### DESCRIPTION OF EMBODIMENTS

The following describes technical solutions in embodiments of this application with reference to the accompanying drawings in embodiments of this application.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this specification, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

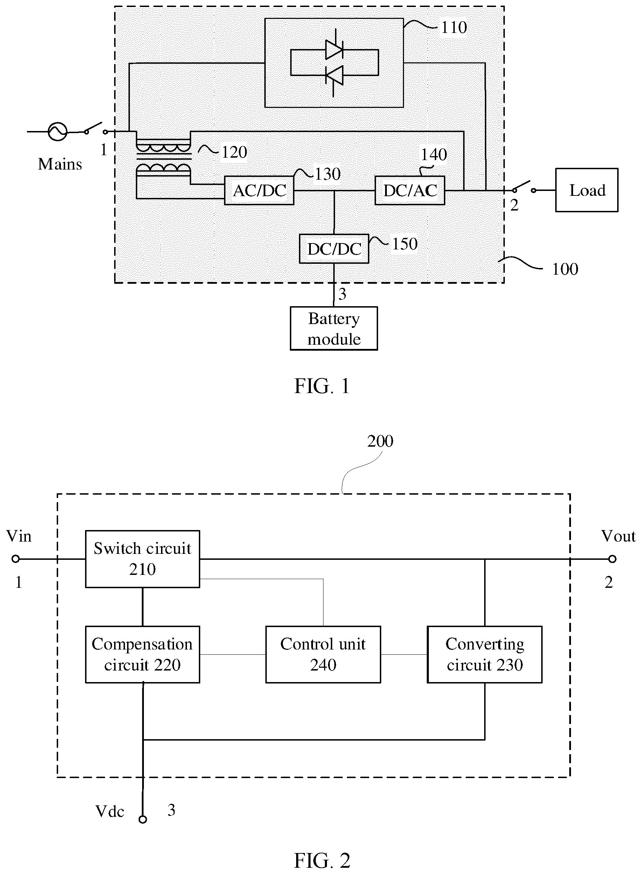

FIG. 1 is a schematic diagram of a circuit structure of a power distribution circuit of a UPS in the conventional technology. As shown in FIG. 1, the power distribution circuit 100 of the UPS includes a switch circuit 110, a transformer 120, an alternating current/direct current (alternating current/direct current, AC/DC) converter 130, a direct current/alternating current (direct current/alternating current, DC/AC) converter 140, and a direct current/direct current (direct current /direct current, DC/DC) converter 150.

Two binding posts of a primary-side winding (or a secondary-side winding) of the transformer 120, the AC/DC converter 130, and the DC/AC converter 140 are sequentially connected in series. A binding post of the secondary-side winding (or the primary-side winding) of the transformer 120 is used as a first port 1, and is electrically connected to a mains system. The other terminal of the DC/AC converter 140 is used as a second port 2, and is electrically connected to each load. The other binding post of the secondary-side winding (or the primary-side winding) of the transformer 120 is electrically connected to the first port 1. One terminal of the DC/DC converter 150 is electrically connected between the AC/DC converter 130 and the DC/AC converter 140, and the other terminal is electrically used as a third port 3, and is electrically connected to a battery module to form a UPS. Two terminals of the switch circuit 110 are respectively electrically connected to the first port 1 and the second port 2.

When the mains system supplies power normally, an alternating current input by the mains system may directly supply electric energy to the load by using the switch circuit 110. If a voltage of the alternating current of the mains system is less than a rated voltage of the load, the alternating current input by the mains system may provide a part of the voltage for the load by using the switch circuit 110. The alternating current input by the mains system may be isolated by using the transformer 120, and transmitted to the AC/DC converter 130. The alternating current may be converted by using the AC/DC converter 130 and the DC/AC converter 140, to obtain a stable alternating current, and provide another part of the voltage for the load.

When the mains system is abnormal, the load may be powered by the battery module. After a direct current input by the battery module flows through the DC/DC converter 150 to obtain a stable direct current, the direct current is converted by using the DC/AC converter 140, so as to provide a stable alternating current for the load.

In the conventional technology, the transformer 120 may isolate an alternating current between the mains system and the load, to avoid impact of abnormality of the alternating current of the mains system on the load and the battery module. However, the transformer 120 of the power distribution circuit 100 of the UPS is a power frequency transformer, which has defects of a large size, a heavy weight, and high costs, and is not conducive to popularization of the power distribution circuit 100 of the UPS. In addition, when the transformer 120 isolates the alternating current of the mains system, a no-load excitation current exists in the transformer 120. This reduces conversion efficiency of a compensation circuit formed by the transformer 120, the AC/DC converter 130, and the DC/AC converter 140.

To resolve defects existing in the existing power distribution circuit of the UPS, this application designs a power distribution circuit of a UPS and a power supply system.

FIG. 2 is a schematic diagram of an architecture of a power distribution circuit of a UPS according to an embodiment of this application. As shown in FIG. 2, the power distribution circuit 200 of the UPS includes a first port 1, a second port 2, a third port 3, a switch circuit 210, a compensation circuit 220, and a converting circuit 230. The switch circuit 210 is coupled between the first port 1 and the second port 2. The compensation circuit 220 is coupled between the third port 3 and the switch circuit 210. The converting circuit 230 is coupled between the third port 3 and the second port 2. The first port 1 is electrically connected to an external alternating current power supply. The second port 2 is electrically connected to a load. The third port 3 is electrically connected to an external direct current power supply. In another embodiment, the third port 3 may be electrically connected to the load. An alternating current input by the first port 1 may be converted by using the converting circuit 230, and then input to the load, so that the power distribution circuit of the uninterruptible power supply can supply power to the direct current load, thereby adding an application scenario of the power distribution circuit of the uninterruptible power supply.

In this embodiment of this application, when a voltage of the alternating current received by the first port 1 is not less than a rated voltage of the load of the second port 2, the power distribution circuit 200 of the UPS enables the alternating current of the first port 1 to supply power to the load of the second port 2. When the voltage of the alternating current received by the first port 1 is less than the rated voltage of the load of the second port 2, the compensation circuit 220 converts a direct current of the third port 3 into an alternating current, and inputs the alternating current to the second port 2. The power distribution circuit 200 of the UPS enables the alternating current of the first port 1 and the alternating current output by the compensation circuit 220 to jointly supply power to the load of the second port 2. Compared with the existing power distribution circuit 100 of the UPS, the power distribution circuit 200 of the UPS does not need to use a transformer to convert a voltage of the mains system into a compensation voltage, and provides an additional voltage for the load. A voltage of the compensation voltage is equal to a difference between the voltage of the alternating current input by the first port 1 and the rated voltage of the load of the second port 2.

The switch circuit 210 may be coupled to a live line between the first port 1 and the second port 2, or coupled to a live wire and a neutral wire between the first port 1 and the second port 2. The switch circuit 210 is configured to control the first port 1 to be connected to the second port 2. In this embodiment of this application, the switch circuit 210 is preferably a static transfer switch (static transfer switch, STS). Certainly, the switch circuit 210 may alternatively be another type of switch. This is not limited in this application.

The STS is a switch that automatically switches between two power supplies. In a normal working state, if a main power supply is within a normal voltage range, the load is connected to the main power supply. When the main power supply is abnormal, the STS automatically switches the load to a standby power supply. When the main power supply returns to a normal state, the STS automatically switches the load to the main power supply. In this application, the STS is in a switched-on state only when a voltage value of an alternating current flowing through the STS is within a specified range. The STS may limit a voltage value of an alternating current flowing into the power distribution circuit of the UPS, to ensure stability of the alternating current input to the load of the second port 2.

In this application, when the alternating current input by the first port 1 is within a normal voltage range, the switch circuit 210 is in a closed state. In another embodiment, a normal voltage may be a 220 V voltage. The normal voltage range may be a range of 220 V±5 V

The alternating current input by the first port 1 is input to the load of the second port 2 by using the switch circuit 210, so that the mains system supplies power to the load. When the alternating current input by the first port 1 is not within the normal voltage range, the switch circuit 210 is in an open state. In this case, the mains system cannot supply power to the load.

One terminal of the compensation circuit 220 is coupled to the third port 3, and the other terminal is coupled to two terminals of the switch circuit 210. The compensation circuit 220 is configured to convert a direct current of the third port 3 into an alternating current. In this embodiment of this application, the switch circuit 210 is in an open state, and the compensation circuit 220 may convert the direct current of the third port 3 into the alternating current, and provide the alternating current for the load of the second port 2.

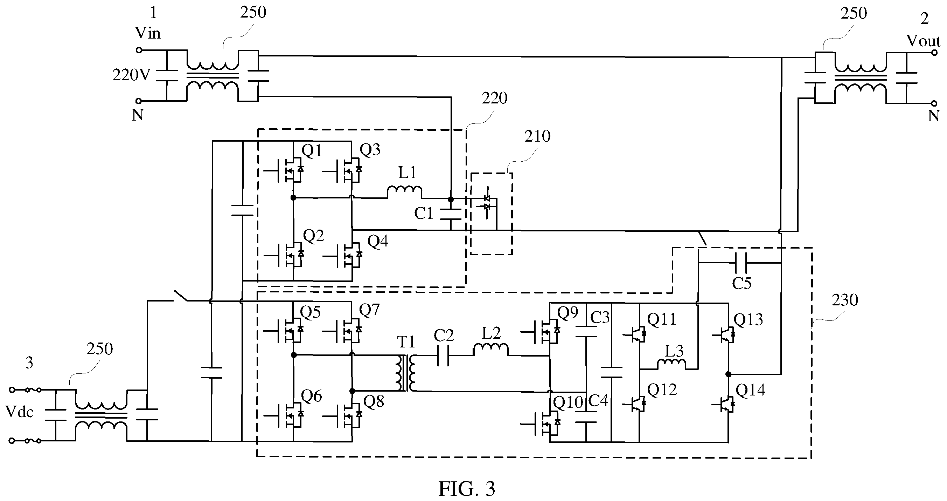

As shown in FIG. 3, the compensation circuit 220 includes a first switch Q1, a second switch Q2, a third switch Q3, a fourth switch Q4, a first inductor L1, and a first capacitor C1. The first switch Q1 and the second switch Q2 are connected in series on a branch. The third switch Q3 and the fourth switch Q4 are connected in series on a branch. The branch on which the first switch Q1 and the second switch Q2 are located and the branch on which the third switch Q3 and the fourth switch Q4 are located are connected in parallel on two terminals of the third port 3. A node between the first switch Q1 and the second switch Q2 is coupled to one terminal of the switch circuit 210 by using the first inductor L1. A node between the third switch Q3 and the fourth switch Q4 is coupled to the other terminal of the switch circuit 210. The first capacitor C1 is electrically connected to the two terminals of the switch circuit 210.

The first switch Q1, the second switch Q2, the third switch Q3, and the fourth switch Q4 each include a metal-oxide-semiconductor field-effect transistor (metal-oxide-semiconductor field-effect transistor, MOSFET) and a diode, and the MOS transistor and the diode are connected in parallel. The MOS transistor of the first switch Q1 and the MOS transistor of the second switch Q2 may form an inverter part of a switch network. The MOS transistor of the third switch Q3 and the MOS transistor of the fourth switch Q4 may form an inverter part of the switch network. The diode is a body diode of the MOS transistor. The diode may enable the compensation circuit 220 to work in freewheeling mode in dead time.

The direct current Vdc of the third port 3 is input to the branch on which the first switch Q1 and the second switch Q2 are located and the branch on which the third switch Q3 and the fourth switch Q4 are located. After gate electrodes of the MOS transistor of the first switch Q1, the MOS transistor of the second switch Q2, the MOS transistor of the third switch Q3, and the MOS transistor of the fourth switch Q4 receive a pulse width modulation (pulse width modulation, PWM) signal, a bridge arm formed by the first switch Q1 and the second switch Q2 and a bridge arm formed by the third switch Q3 and the fourth switch Q4 jointly form a full-bridge circuit. The full-bridge circuit may invert a direct current into an alternating current. In this case, a voltage waveform of the alternating current is a square waveform.

The first inductor L1 and the first capacitor C1 form an LC (short for Lr and Cr, where Lr is a resonant inductor and Cr is a resonant capacitor) filter circuit. The alternating current in the square waveform is input to the LC filter circuit. The LC filter circuit filters the square waveform of the alternating current into an alternating current in a smooth sinusoidal waveform. The alternating current output by the LC filter circuit is applicable to all loads. In addition, when a voltage of a load changes instantaneously, the LC filter circuit may perform temporary energy buffer.

In this embodiment of this application, a circuit structure of the compensation circuit 220 is not limited to the structure shown in FIG. 3, and may alternatively be another circuit structure. This is not limited in this application. In addition, in this application, the compensation circuit 220 is similar to an existing direct current/alternating current (direct current/alternating current, DC/AC) converter, and is configured to convert a direct current into an alternating current. Therefore, the compensation circuit 220 may be replaced with a DC/AC converter.

One terminal of the converting circuit 230 is coupled to the third port 3, and the other terminal is coupled to two terminals of the second port 2. The converting circuit 230 may be configured to convert the direct current of the third port 3 into an alternating current. The converting circuit 230 may be further configured to convert the alternating current of the first port 1 into a direct current.

The converting circuit 230 includes an LLC (short for Lr, Lm, and Cr, where Lr is a resonant inductor, Lm is an excitation inductor, and Cr is a resonant capacitor) bidirectional converting circuit and an inverter/rectifier circuit. As shown in FIG. 3, the LLC bidirectional converting circuit includes a fifth switch Q5, a sixth switch Q6, a seventh switch Q7, an eighth switch Q8, a ninth switch Q9, a tenth switch Q10, a transformer T1, a second capacitor C2, a third capacitor C3, a fourth capacitor C4, and a second inductor L2.

The fifth switch Q5 and the sixth switch Q6 are connected in series on a branch. The seventh switch Q7 and the eighth switch Q8 are connected in series on a branch. The branch on which the fifth switch Q5 and the sixth switch Q6 are located and the branch on which the seventh switch Q7 and the eighth switch Q8 are located are connected in parallel on the two terminals of the third port 3. A node between the fifth switch Q5 and the sixth switch Q6 is coupled to one port of a primary-side winding (or a secondary-side winding) of the transformer T1. A node between the seventh switch Q7 and the eighth switch Q8 is coupled to the other port of the primary-side winding (or the secondary-side winding) of the transformer T1.

The ninth switch Q9 and the tenth switch Q10 are connected in series on a branch. The third capacitor C3 and the fourth capacitor C4 are connected in series on a branch. The branch on which the ninth switch Q9 and the tenth switch Q10 are located and the branch on which the third capacitor C3 and the fourth capacitor C4 are located are connected in parallel. A node between the ninth switch Q9 and the tenth switch Q10 is coupled to one port of the secondary-side winding (or the primary-side winding) of the transformer T1 by using the second capacitor C2 and the second inductor L2 in sequence. A node between the third capacitor C3 and the fourth capacitor C4 is coupled to the other port of the secondary-side winding (or the primary-side winding) of the transformer T1.

The inverter/rectifier circuit includes an eleventh switch Q11, a twelfth switch Q12, a thirteenth switch Q13, a fourteenth switch Q14, a third inductor L3, and a fifth capacitor C5.

The eleventh switch Q11 and the twelfth switch Q12 are connected in series on a branch. The thirteenth switch Q13 and the fourteenth switch Q14 are connected in series on a branch. The branch on which the eleventh switch Q11 and the twelfth switch Q12 are located and the branch on which the thirteenth switch Q13 and the fourteenth switch Q14 are located are connected in parallel. In addition, the branch on which the ninth switch Q9 and the tenth switch Q 10 are located, the branch on which the third capacitor C3 and the fourth capacitor C4 are located, the branch on which the eleventh switch Q11 and the twelfth switch Q12 are located, and the branch on which the thirteenth switch Q13 and the fourteenth switch Q14 are located are connected in parallel.

A node between the eleventh switch Q11 and the twelfth switch Q12 is coupled to one port of the second port 2 by using the third inductor L3. A node between the thirteenth switch Q13 and the fourteenth switch Q14 is coupled to the other port of the second port 2. The fifth capacitor C5 is electrically connected between the node between the thirteenth switch Q13 and the fourteenth switch Q14 and the third inductor L3.

In this embodiment of this application, the converting circuit 230 may convert the direct current of the third port 3 into the alternating current with a specified voltage, to provide the alternating current for the load of the second port 2. Specifically:

As shown in FIG. 3, when the direct current Vdc of the third port 3 is input to the LLC bidirectional converting circuit, the direct current Vdc is input to the branch on which the fifth switch Q5 and the sixth switch Q6 are located and the branch on which the seventh switch Q7 and the eighth switch Q8 are located. After gate electrodes of a MOS transistor of the fifth switch Q5, a MOS transistor of the sixth switch Q6, a MOS transistor of the seventh switch Q7, and a MOS transistor of the eighth switch Q8 receive PWM signals, a bridge arm formed by the fifth switch Q5 and the sixth switch Q6 and a bridge arm formed by the seventh switch Q7 and the eighth switch Q8 jointly form a full-bridge control circuit. The full-bridge control circuit may invert a direct current into an alternating current. In this case, a voltage waveform of the alternating current is a square waveform.

The alternating current in the square waveform is input to the transformer T1. The transformer T1 converts a voltage of the alternating current into an alternating current with a specified voltage based on a ratio of a quantity of coil turns of the primary-side winding to a quantity of coil turns of the secondary-side winding, so that the secondary-side winding of the transformer T1 outputs an expected high-frequency pulse voltage. In an embodiment, the ratio of the quantity of coil turns of the primary-side winding to the quantity of coil turns of the secondary-side winding of the transformer T 1 is 8:1. A ratio of a value of a voltage of the primary-side winding to a value of a voltage of the secondary-side winding of the transformer T 1 is 8:1. The second inductor L2 and the second capacitor C2 form an LC resonant circuit. The LC resonant circuit may change series impedance of the LC resonant circuit by changing a frequency of the MOS transistor, to obtain the specified voltage.

In this application, the direct current Vdc works in a mode of adjusting a switching frequency by using the full-bridge circuit formed by the switch Q5 to the switch Q8, to match the second inductor L2 and the second capacitor C2, thereby forming resonant impedance of LC series resonance. The alternating current transmits energy to the secondary-side winding by using the transformer T1, to obtain a bus voltage before inversion.

The alternating current is input to the branch on which the ninth switch Q9 and the tenth switch Q10 are located and the branch on which the third capacitor C3 and the fourth capacitor C4 are located. After gate electrodes of a MOS transistor of the ninth switch Q9 and a MOS transistor of the tenth switch Q10 receive PWM signals, a bridge arm formed by the ninth switch Q9 and the tenth switch Q10 and a bridge arm formed by the third capacitor C3 and the fourth capacitor C4 jointly form a full-bridge rectifier circuit. The full-bridge rectifier circuit may rectify an alternating current into a direct current.

In this embodiment of this application, the full-bridge control circuit of the LLC bidirectional converting circuit inverts a direct current into an alternating current, and the full-bridge rectifier circuit of the LLC bidirectional converting circuit rectifies an alternating current into a direct current, and may output a direct current with a specified voltage. The specified voltage is the same as the rated voltage of the load.

When a direct current of the LLC bidirectional converting circuit is input to the inverter/rectifier circuit, the direct current is input to the branch on which the eleventh switch Q11 and the twelfth switch Q12 are located and the branch on which the thirteenth switch Q13 and the fourteenth switch Q14 are located. After gate electrodes of a MOS transistor of the eleventh switch Q11, a MOS transistor of the twelfth switch Q12, a MOS transistor of the thirteenth switch Q13, and a MOS transistor of the fourteenth switch Q14 receive PWM signals, a bridge arm formed by the eleventh switch Q11 and the twelfth switch Q12 and a bridge arm formed by the thirteenth switch Q13 and the fourteenth switch Q14 jointly form a full-bridge inverter circuit. The full-bridge inverter circuit may invert a direct current to an alternating current. In this case, a voltage waveform of the alternating current is a square waveform.

The third inductor L3 and the fifth capacitor C5 form an LC filter circuit. The alternating current in the square waveform is input to the LC filter circuit. The LC filter circuit filters the square waveform of the alternating current into an alternating current in a smooth sinusoidal waveform. The alternating current output by the LC filter circuit is applicable to all loads. The alternating current of the LC filter circuit is input to the second port 2, to provide the alternating current for the load.

In this embodiment of this application, the converting circuit 230 may convert the alternating current of the first port 1 into a direct current with a specified voltage, and supply power to a battery module of the third port 3. Specifically:

As shown in FIG. 3, when the alternating current Vin of the first port 1 is input to the inverter/rectifier circuit, the alternating current Vin is input to the branch on which the eleventh switch Q11 and the twelfth switch Q12 are located and the branch on which the thirteenth switch Q13 and the fourteenth switch Q14 are located. After the gate electrodes of the MOS transistor of the eleventh switch Q11, the MOS transistor of the twelfth switch Q12, the MOS transistor of the thirteenth switch Q13, and the MOS transistor of the fourteenth switch Q14 receive the PWM signals, the bridge arm formed by the eleventh switch Q11 and the twelfth switch Q12 and the bridge arm formed by the thirteenth switch Q13 and the fourteenth switch Q14 jointly form a full-bridge rectifier circuit. The full-bridge rectifier circuit may rectify an alternating current into a direct current.

When a direct current of the inverter/rectifier circuit is input to the LLC bidirectional converting circuit, the direct current is input to the branch on which the ninth switch Q9 and the tenth switch Q10 are located and the branch on which the third capacitor C3 and the fourth capacitor C4 are located. After the gate electrodes of the MOS transistor of the ninth switch Q9 and the MOS transistor of the tenth switch Q10 receive the PWM signals, the bridge arm formed by the ninth switch Q9 and the tenth switch Q 10 and the bridge arm formed by the third capacitor C3 and the fourth capacitor C4 jointly form a full-bridge control circuit. The full-bridge control circuit may invert a direct current into an alternating current. In this case, a voltage waveform of the alternating current is a square waveform.

The second inductor L2 and the second capacitor C2 form an LC resonant circuit. The LC resonant circuit may change series impedance of the LC resonant circuit by changing a frequency of the MOS transistor, to obtain the specified voltage. The alternating current is input to the transformer T1. The transformer T1 converts a voltage of the alternating current into an alternating current with a specified voltage based on a ratio of a quantity of coil turns of the primary-side winding to a quantity of coil turns of the secondary-side winding, so that the secondary-side winding of the transformer T1 outputs an expected high-frequency pulse voltage.

The alternating current is input to the branch on which the fifth switch Q5 and the sixth switch Q6 are located and the branch on which the seventh switch Q7 and the eighth switch Q8 are located. After the gate electrodes of the MOS transistor of the fifth switch Q5, the MOS transistor of the sixth switch Q6, the MOS transistor of the seventh switch Q7, and the MOS transistor of the eighth switch Q8 receive the PWM signals, the bridge arm formed by the fifth switch Q5 and the sixth switch Q6 and the bridge arm formed by the seventh switch Q7 and the eighth switch Q8 jointly form a full-bridge rectifier circuit. The full-bridge rectifier circuit may rectify an alternating current into a direct current. The direct current is input to the third port 3, to supply power to the battery module of the third port 3.

In this embodiment of this application, the full-bridge control circuit of the LLC bidirectional converting circuit inverts a direct current into an alternating current, and the full-bridge rectifier circuit of the LLC bidirectional converting circuit rectifies an alternating current into a direct current, and may output a direct current with a specified voltage. The specified voltage is the same as a charging voltage of the battery module.

In this embodiment of this application, a circuit structure of the converting circuit 230 is not limited to the structure shown in FIG. 3, and may alternatively be another circuit structure. This is not limited in this application. In addition, in this application, the converting circuit 230 is similar to an existing bidirectional direct current/direct current (direct current/direct current, DC/DC) converter and a bidirectional DC/AC converter, and is configured to: convert a direct current into a direct current with a specified voltage, and convert a direct current into an alternating current or convert an alternating current into a direct current. Therefore, the compensation circuit 220 may be replaced with a bidirectional DC/DC converter, a rectifier, and a bidirectional DC/AC converter.

In this embodiment of this application, the power distribution circuit 200 of the UPS further includes a control unit 240. The control unit 240 may be electrically connected to the switch circuit 210, the compensation circuit 220, and the converting circuit 230. The control unit 240 may be a device with a processing function, such as a digital signal processor(digital signal processing, DSP) or a system on chip (system on chip, SoC). In this application, the control unit 240 is configured to: monitor an electrical signal of the switch circuit 210, an input electrical signal and an output electrical signal of the compensation circuit 220, and an input electrical signal and an output electrical signal of the converting circuit 230, and send a control signal to the compensation circuit 220 and the converting circuit 230, so that the compensation circuit 220 and the converting circuit 230 output an electrical signal with a specified voltage.

The control unit 240 may detect a voltage value of an alternating current of the switch circuit 210. When the voltage value of the alternating current of the switch circuit 210 is within a specified range, the switch circuit 210 is in a first state. When the voltage value of the alternating current of the switch circuit 210 is not within the specified range, the switch circuit 310 is in a second state. The control unit 240 may determine, based on a monitoring result, whether the switch circuit 210 is in the first state.

In an embodiment, the control unit 240 detects that the voltage value of the alternating current of the switch circuit 210 is within the specified range, the switch circuit 210 is in the first state, and the control unit 240 discards monitoring data received this time or does not perform subsequent processing on the data. The power distribution circuit 200 of the UPS inputs the alternating current of the first port 1 to the load of the second port 2, so that the first port 1 provides electric energy for the load of the second port 2.

In an embodiment, the control unit 240 detects that the voltage value of the alternating current of the switch circuit 210 is within the specified range, and the switch circuit 210 is in the first state. The control unit 240 detects that the voltage value of the alternating current of the switch circuit 210 is less than the rated voltage of the load of the second port 2, and the control unit 340 sends a control signal to the compensation circuit 220, so that the compensation circuit 220 converts the direct current of the third port 3 into the alternating current with the specified voltage. In this way, the third port 3 provides a compensation voltage for the load of the second port 2, so that the load of the second port 2 works normally.

In an embodiment, the control unit 240 detects that the voltage value of the alternating current of the switch circuit 210 is not within the specified range, the switch circuit 310 is in the second state, and the power distribution circuit 200 of the UPS stops supplying power to the first port 1. The control unit 340 sends a control signal to the converting circuit 230, so that the converting circuit 230 converts the direct current of the third port 3 into the alternating current with the specified voltage, and the third port 3 provides electric energy for the load of the second port 2.

The power distribution circuit 200 of the UPS further includes a plurality of electromagnetic compatibility (electromagnetic compatibility, EMC) circuits 250. The EMC circuits 250 are respectively electrically connected to the first port 1, the second port 2, and the third port 3. The EMC circuit 250 is configured to isolate electromagnetic signal transmission between the power distribution circuit 200 of the UPS and another circuit or device.

In this embodiment of this application, when the switch circuit 210, the compensation circuit 220, and the converting circuit 230 work, different electromagnetic signals are generated in the power distribution circuit 200 of the UPS. After the power distribution circuit 200 of the UPS is electrically connected to another circuit or device, an electromagnetic signal of the power distribution circuit 200 of the UPS interferes with the another circuit or device. Consequently, practicability of the power distribution circuit 200 of the UPS is reduced. The first port 1, the second port 2, and the third port 3 are electrically connected to the EMC circuits 250 respectively. The electromagnetic signal of the power distribution circuit 200 of the UPS cannot be transmitted to another circuit or device, and does not interfere with normal work of the circuit or device. An electromagnetic signal of the circuit or device cannot be transmitted to the power distribution circuit 200 of the UPS, to ensure that the power distribution circuit 200 of the UPS is not interfered by the circuit or device.

As shown in FIG. 2, the EMC circuit 250 includes two capacitors and one common-mode inductor. The two capacitors are respectively connected in parallel on two terminals of the common-mode inductor. In an embodiment, when the alternating current of the first port 1 is input from one terminal of the EMC circuit 250 of the first port 1, the capacitors and the common-mode inductor filter the alternating current, to eliminate an electromagnetic signal carried in the alternating current. After the alternating current is output from the other terminal of the EMC circuit 250 of the first port 1, the alternating current does not carry an electromagnetic signal, or carries a quite weak electromagnetic signal. The EMC circuit 250 of the first port 1 may eliminate interference caused by another external circuit or device to the power distribution circuit 200 of the UPS.

In an embodiment, when an alternating current of the power distribution circuit 200 of the UPS is input from one terminal of the EMC circuit 250 of the second port 2, the capacitors and the common-mode inductor filter the alternating current, to eliminate an electromagnetic signal carried in the alternating current. After the alternating current is output from the other terminal of the EMC circuit 250 of the second port 2, the alternating current does not carry an electromagnetic signal, or carries a quite weak electromagnetic signal. The EMC circuit 250 of the second port 2 may eliminate interference caused by the power distribution circuit 200 of the UPS to the load of the second port 2.

In an embodiment, when the direct current of the third port 3 is input from one terminal of the EMC circuit 250 of the third port 3, the capacitors and the common-mode inductor filter the direct current, to eliminate an electromagnetic signal carried in the direct current. After the direct current is output from the other terminal of the EMC circuit 250 of the third port 3, the direct current does not carry an electromagnetic signal, or carries a quite weak electromagnetic signal. The EMC circuit 250 of the third port 3 may eliminate interference caused by another external circuit or device to the power distribution circuit 200 of the UPS.

In an embodiment, when a direct current of the power distribution circuit 200 of the UPS is input from one terminal of the EMC circuit 250 of the third port 3, the capacitors and the common-mode inductor filter the direct current, to eliminate an electromagnetic signal carried in the direct current. After the direct current is output from the other terminal of the EMC circuit 250 of the third port 3, the direct current does not carry an electromagnetic signal, or carries a quite weak electromagnetic signal. The EMC circuit 250 of the third port 3 may eliminate interference caused by the power distribution circuit 200 of the UPS to another circuit or device of the third port 3.

In this embodiment of this application, the first port 1 is electrically connected to the second port 2 by using the switch circuit 210. The third port 3 is coupled to the two terminals of the switch circuit 210 by using the compensation circuit 220. The third port 3 is coupled to a circuit between the first port 1 and the second port 2 by using the converting circuit 230. When the input voltage of the first port 1 is less than the rated voltage of the load of the second port 2, an input voltage of the third port 3 is input to the compensation circuit 220. The compensation circuit 220 converts a direct current into an alternating current, so that the alternating current output by the compensation circuit 220 and the input voltage of the first port 1 jointly supply power to the load of the second port 2. Compared with the existing power distribution circuit of the UPS, a transformer is not required, so that a size of the power distribution circuit 200 of the UPS can be reduced.

An input electrical signal of the first port may be input to the converting circuit 230. The converting circuit 230 may convert an alternating current into a direct current with a specified voltage, to supply power to the battery module of the third port 3. When the first port 1 has no input electrical signal, the input voltage of the third port 3 is input to the converting circuit 230. The converting circuit 230 may convert a direct current into an alternating current with a specified voltage, to supply electric energy for the load of the second port 2. The converting circuit 230 may improve conversion efficiency of the power distribution circuit 200 of the uninterruptible power supply.

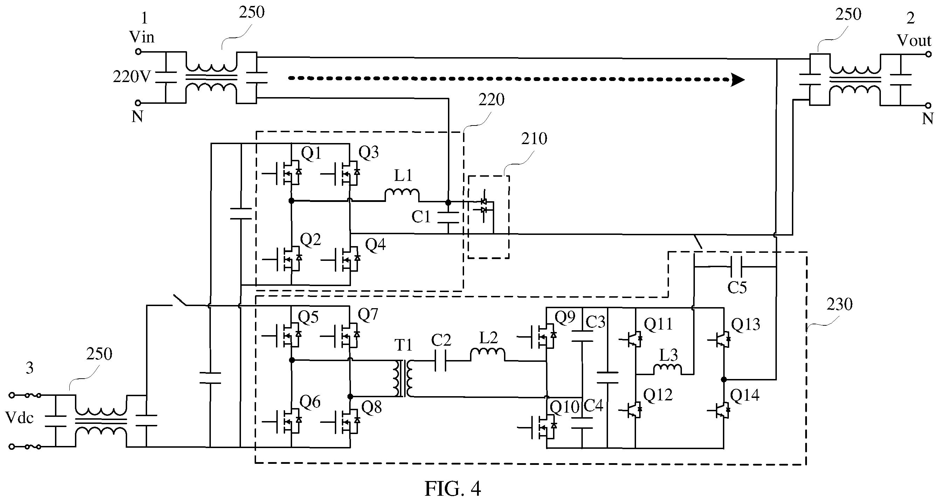

FIG. 4 is a schematic diagram of a working mode of a power distribution circuit of a UPS according to an embodiment of this application. As shown in FIG. 4, the control unit 240 obtains a voltage of the switch circuit 210, and detects an input voltage Vin of the first port 1. When the control unit 240 determines that the input voltage Vin of the first port 1 is not less than the rated voltage of the load of the second port 2, the control unit 240 may enable the compensation circuit 220 and the converting circuit 230 not to work.

In the power distribution circuit 200 of the UPS, when the input voltage Vin of the first port 1 is not less than the rated voltage of the load of the second port 2, the input voltage Vin of the first port 1 flows through the EMC circuit 250 of the first port 1, to eliminate an electromagnetic signal of the alternating current. After flowing through the switch circuit 210, the input voltage Vin is input to the EMC circuit 250 of the second port 2. After the electromagnetic signal of the alternating current is eliminated by the EMC circuit 250 of the second port 2, the alternating current is input to the second port 2. The input voltage Vin of the first port 1 may directly provide the alternating current for the load of the second port 2.

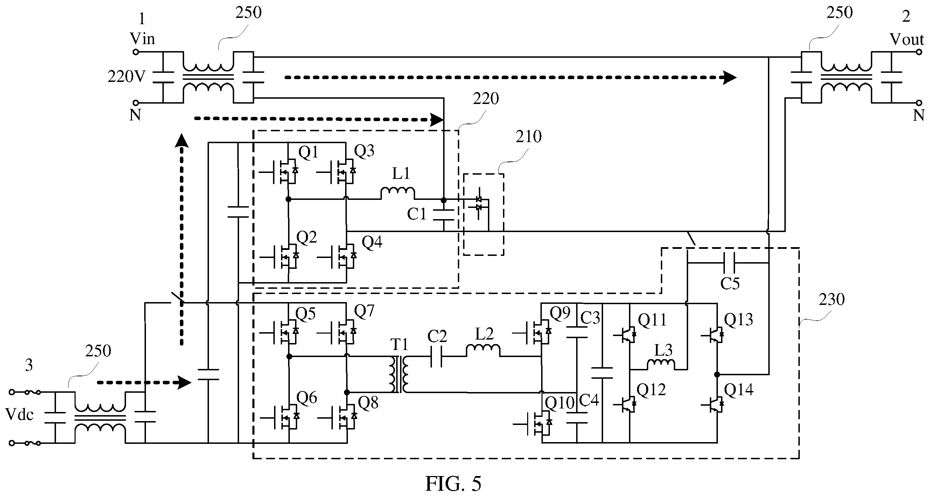

FIG. 5 is a schematic diagram of a working mode of a power distribution circuit of a UPS according to an embodiment of this application. As shown in FIG. 5, the control unit 240 obtains a voltage of the switch circuit 210, and detects an input voltage Vin of the first port 1. When the control unit 240 determines that the input voltage Vin of the first port 1 is less than the rated voltage of the load of the second port 2, the control unit 240 may enable the compensation circuit 220 to work. The third port 3 may provide an alternating current for the load of the second port 2 by using the compensation circuit 220.

In the power distribution circuit 200 of the UPS, the input voltage Vin of the first port 1 flows through the EMC circuit 250 of the first port 1, to eliminate an electromagnetic signal of the alternating current. After flowing through the switch circuit 210, the input voltage Vin is input to the EMC circuit 250 of the second port 2. After the electromagnetic signal of the alternating current is eliminated by the EMC circuit 250 of the second port 2, the alternating current is input to the second port 2.

The input voltage Vdc of the third port 3 flows through the EMC circuit 250 of the third port 3, to eliminate an electromagnetic signal of the direct current. After the input voltage Vdc is input to the compensation circuit 220, the compensation circuit 210 converts the direct current into the alternating current with the specified voltage, and combines the alternating current into the EMC circuit 250 of the second port 2. After the electromagnetic signal of the alternating current is eliminated by the EMC circuit 250 of the second port 2, the alternating current is input to the second port 2. A sum of the alternating current output by the compensation circuit 220 and the input voltage Vin of the first port 1 is the rated voltage of the load of the second port 2, so that the power distribution circuit 200 of the UPS can normally supply the alternating current to the load of the second port 2.

In this embodiment of this application, a voltage of the alternating current output by the compensation circuit 220 is a difference between the rated voltage of the load of the second port 2 and the input voltage Vin of the first port 1. A value of the voltage of the alternating current output by the compensation circuit 220 is related to control logics of the first switch Q1, the second switch Q2, the third switch Q3, and the fourth switch Q4 of the compensation circuit 220.

In an embodiment, the control unit 240 obtains the input voltage Vin of the first port 1, the rated voltage of the load of the second port 2, and the input voltage Vdc of the third port 3. The control unit 240 may calculate, based on the input voltage Vin of the first port 1 and the rated voltage of the load of the second port 2, an output voltage that needs to be compensated by the compensation circuit 220. The control unit 240 may determine the PWM signals of the MOS transistor of the first switch Q1, the MOS transistor of the second switch Q2, the MOS transistor of the third switch Q3, and the MOS transistor of the fourth switch Q4 based on the input voltage Vdc of the third port 3 and the output voltage of the compensation circuit 220. The control unit 240 may send the PWM signals to the MOS transistors of the switches of the compensation circuit 220, so as to convert the input voltage Vdc of the third port 3 into the output voltage of the compensation circuit 220.

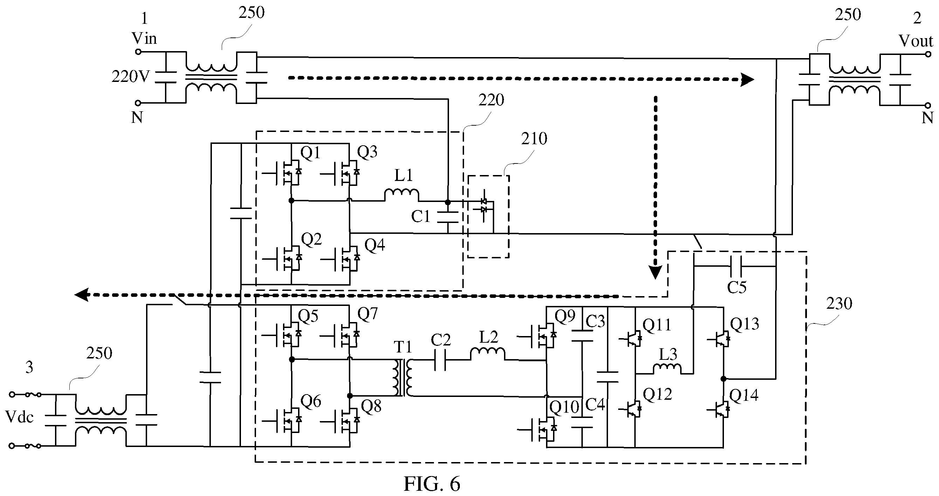

FIG. 6 is a schematic diagram of a working mode of a power distribution circuit of a UPS according to an embodiment of this application. As shown in FIG. 6, the control unit 240 obtains a voltage of the switch circuit 210, and detects an input voltage Vin of the first port 1. When the control unit 240 determines that the input voltage Vin of the first port 1 is not less than the rated voltage of the load of the second port 2, the control unit 240 may enable the converting circuit 230 to work. The first port 1 may provide a direct current for the third port 3 by using the converting circuit 230.

In the power distribution circuit 200 of the UPS, the input voltage Vin of the first port 1 flows through the EMC circuit 250 of the first port 1, to eliminate an electromagnetic signal of the alternating current. After flowing through the switch circuit 210, the input voltage Vin is input to the EMC circuit 250 of the second port 2. After the electromagnetic signal of the alternating current is eliminated by the EMC circuit 250 of the second port 2, the alternating current is input to the second port 2. The input voltage Vin of the first port 1 may directly provide the alternating current for the load of the second port 2.

After the input voltage Vin of the first port 1 is input to the converting circuit 230, the converting circuit 230 converts the alternating current into the direct current with the specified voltage, and inputs the direct current to the EMC circuit 250 of the third port 3. After an electromagnetic signal of the direct current is eliminated by the EMC circuit 250 of the third port 3, the direct current is input to the third port 3, and power is supplied to the battery module of the third port 3.

In an embodiment, the control unit 240 obtains the input voltage Vin of the first port 1 and an input voltage Vdc of the third port 3. The control unit 240 may determine the PWM signals of the MOS transistor of the fifth switch Q5, the MOS transistor of the sixth switch Q6, the MOS transistor of the seventh switch Q7, the MOS transistor of the eighth switch Q8, the MOS transistor of the ninth switch Q9, the MOS transistor of the tenth switch Q10, the MOS transistor of the eleventh switch Q11, the MOS transistor of the twelfth switch Q12, the MOS transistor of the thirteenth switch Q13, and the MOS transistor of the fourteenth switch Q14 based on the input voltage Vin of the first port 1 and the input voltage Vdc of the third port 3. The control unit 240 may send the PWM signals to the MOS transistors of the switches of the converting circuit 230, to convert the input voltage Vin of the first port 1 into the input voltage Vdc of the third port 3.

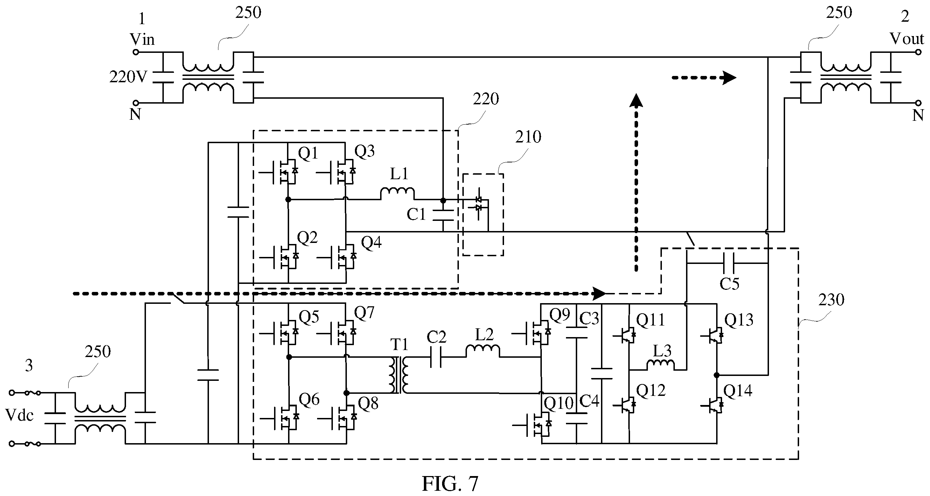

FIG. 7 is a schematic diagram of a working mode of a power distribution circuit of a UPS according to an embodiment of this application. As shown in FIG. 7, the control unit 240 obtains a voltage of the switch circuit 210, and detects an input voltage Vin of the first port 1. When the control unit 240 determines that the input voltage Vin of the first port 1 is zero, the control unit 240 may enable the converting circuit 230 to work. The third port 3 may provide the alternating current for the load of the second port 2 by using the converting circuit 230.

In the power distribution circuit 200 of the UPS, an input voltage Vdc of the third port 3 flows through the EMC circuit 250 of the third port 3, to eliminate an electromagnetic signal of the direct current. After the direct current is input to the converting circuit 230, the converting circuit 230 converts the direct current into the alternating current with the specified voltage, and inputs the alternating current to the EMC circuit 250 of the second port 2. After the electromagnetic signal of the alternating current is eliminated by the EMC circuit 250 of the second port 2, the alternating current is input to the second port 2. The input voltage Vdc of the third port 3 may directly provide the alternating current for the load of the second port 2.

In an embodiment, the control unit 240 obtains the input voltage Vdc of the third port 3 and the rated voltage of the load of the second port 2. The control unit 240 may determine the PWM signals of the MOS transistor of the fifth switch Q5, the MOS transistor of the sixth switch Q6, the MOS transistor of the seventh switch Q7, the MOS transistor of the eighth switch Q8, the MOS transistor of the ninth switch Q9, the MOS transistor of the tenth switch Q10, the MOS transistor of the eleventh switch Q11, the MOS transistor of the twelfth switch Q12, the MOS transistor of the thirteenth switch Q13, and the MOS transistor of the fourteenth switch Q14 based on the input voltage Vdc of the third port 3 and the rated voltage of the load of the second port 2. The control unit 240 may send the PWM signals to the MOS transistors of the switches of the converting circuit 230, to convert the input voltage Vdc of the third port 3 into the rated voltage of the load of the second port 2.

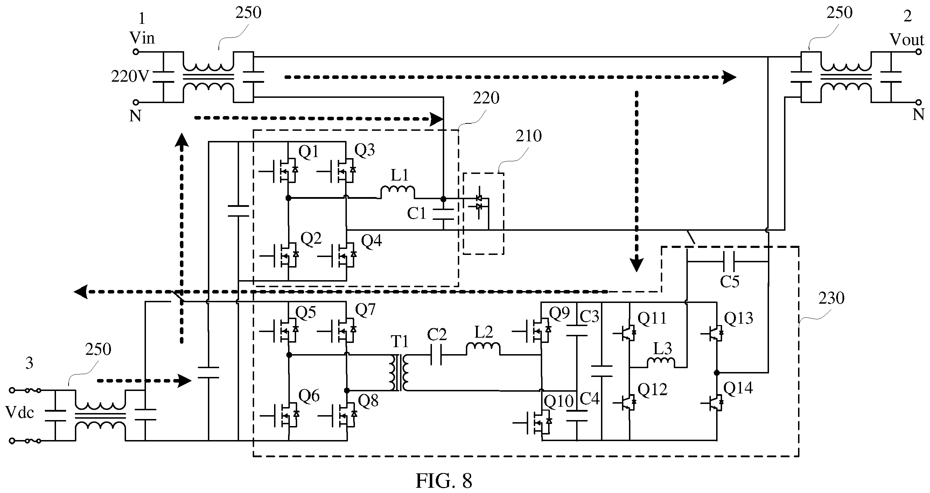

FIG. 8 is a schematic diagram of a working mode of a power distribution circuit of a UPS according to an embodiment of this application. As shown in FIG. 8, the control unit 240 obtains a voltage of the switch circuit 210, and detects an input voltage Vin of the first port 1. When the control unit 240 determines that the input voltage Vin of the first port 1 is less than the rated voltage of the load of the second port 2, the control unit 240 may enable the compensation circuit 220 and the converting circuit 230 to work. The first port 1 may provide a direct current for the third port 3 by using the converting circuit 230. The third port 3 may provide an alternating current for the load of the second port 2 by using the compensation circuit 220.

In the power distribution circuit 200 of the UPS, the input voltage Vin of the first port 1 flows through the EMC circuit 250 of the first port 1, to eliminate an electromagnetic signal of the alternating current. After flowing through the switch circuit 210, the input voltage Vin is input to the EMC circuit 250 of the second port 2. After the electromagnetic signal of the alternating current is eliminated by the EMC circuit 250 of the second port 2, the alternating current is input to the second port 2.

The input voltage Vdc of the third port 3 flows through the EMC circuit 250 of the third port 3, to eliminate an electromagnetic signal of the direct current. After the input voltage Vdc is input to the compensation circuit 220, the compensation circuit 220 converts the direct current into the alternating current with the specified voltage, and combines the alternating current into the EMC circuit 250 of the second port 2. After the electromagnetic signal of the alternating current is eliminated by the EMC circuit 250 of the second port 2, the alternating current is input to the second port 2. A sum of the alternating current output by the compensation circuit 220 and the input voltage Vin of the first port 1 is the rated voltage of the load of the second port 2, so that the power distribution circuit 200 of the UPS can normally supply the alternating current to the load of the second port 2.

After the input voltage Vin of the first port 1 is input to the converting circuit 230, the converting circuit 230 converts the alternating current into the direct current with the specified voltage, and inputs the direct current to the EMC circuit 250 of the third port 3. After an electromagnetic signal of the direct current is eliminated by the EMC circuit 250 of the third port 3, the direct current is input to the third port 3, and power is supplied to the battery module of the third port 3.

An embodiment of this application provides a power supply system. The power supply system includes an alternating current power supply, a direct current power supply, at least one load, and at least one power distribution circuit of a UPS. The alternating current power supply may be separately coupled to an alternating current input terminal in the at least one power distribution circuit of the UPS, and is configured to provide an alternating current. The direct current power supply may be separately coupled to a direct current input terminal in the at least one power distribution circuit of the UPS, and is configured to provide a direct current. The at least one load may be separately coupled to a load input terminal of the at least one power distribution circuit of the UPS, and is configured to receive an alternating current. The power distribution circuit of the UPS may be the power distribution circuit of the UPS recorded in FIG. 2 to FIG. 8 and the foregoing corresponding protection solutions. Because the power supply system includes the power distribution circuit of the UPS, the power supply system has all or at least some advantages of the power distribution circuit of the UPS. The alternating current power supply may be a mains system, a photovoltaic power supply system, or another alternating current system. The direct current power supply may be a battery, a lithium battery, or another battery module. The power supply system may be applied to an electrical device such as a data center, an outdoor cabinet, or a base station, or may be applied to a scenario such as a bank outlet, small and midsize entities, or a miniaturized data center. This is not limited in this application.

A quantity of components, types of the components, and the like in the power distribution circuit of the UPS provided in embodiments of this application are not limited to the foregoing embodiments. All technical solutions implemented in the principle of this application fall within the protection scope of this solution. Technical solutions that are of any one or more embodiments or figures in this specification and that are combined in a proper manner shall fall within the protection scope of this solution.

A quantity of components, types of the components, and the like in the power supply system in embodiments of this application are not limited to the foregoing embodiments. All technical solutions implemented in the principle of this application fall within the protection scope of this solution. Technical solutions that are of any one or more embodiments or figures in the specification and that are combined in a proper manner shall fall within the protection scope of this solution.

Finally, it is noted that the foregoing embodiments are merely used to describe the technical solutions of this application. A person of ordinary skill in the art should understand that, although this application is described in detail with reference to the foregoing embodiments, the technical solutions described in the foregoing embodiments may still be modified, or some technical features thereof may be equivalently replaced. Such modifications or replacements do not make the essence of the corresponding technical solutions depart from the scope of the technical solutions of embodiments of this application.

## Claims

1. A power distribution circuit of an uninterruptible power supply, comprising:
a first port, coupled to an alternating current power supply, and configured to receive an alternating current;
a second port, coupled to a load, and configured to supply power to the load;
a third port, coupled to a direct current power supply, and configured to input and/or output a direct current;
a switch circuit, coupled between the first port and the second port, and configured to control the first port to output the alternating current to the second port;
a compensation circuit, coupled between the third port and the switch circuit, and configured to: when a voltage of the alternating current input by the first port is less than a rated voltage of the load of the second port, convert the direct current input by the third port into an alternating current, and provide a compensation voltage for the load of the second port; and
a converting circuit, coupled between the third port and the second port, and configured to: convert the direct current input by the third port into an alternating current with a specified voltage, and provide the alternating current for the load of the second port; and/or convert the alternating current input by the first port into a direct current with a specified voltage, and provide the direct current for the direct current power supply of the third port.

2. The power distribution circuit of the uninterruptible power supply according to claim 1, wherein the compensation circuit comprises a first switch, a second switch, a third switch, a fourth switch, a first inductor, and a first capacitor, wherein
the first switch and the second switch are connected in series on a branch, the third switch and the fourth switch are connected in series on a branch, and the branch on which the first switch and the second switch are located and the branch on which the third switch and the fourth switch are located are connected in parallel on two terminals of the third port; and
a node between the first switch and the second switch is coupled to one terminal of the switch circuit by using the first inductor, a node between the third switch and the fourth switch is coupled to the other terminal of the switch circuit, and the first capacitor is electrically connected to two terminals of the switch circuit.

3. The power distribution circuit of the uninterruptible power supply according to claim 2, wherein the converting circuit comprises an LLC bidirectional converting circuit and an inverter/rectifier circuit, wherein
one terminal of the LLC bidirectional converting circuit is coupled to the third port, and the other terminal is coupled to one terminal of the inverter/rectifier circuit, and the LLC bidirectional converting circuit is configured to convert a direct current into a direct current with a specified voltage; and
the other terminal of the inverter/rectifier circuit is coupled to the second port, and the inverter/rectifier circuit is configured to perform conversion between a direct current and an alternating current.

4. The power distribution circuit of the uninterruptible power supply according to claim 3, wherein the LLC bidirectional converting circuit comprises: a fifth switch, a sixth switch, a seventh switch, an eighth switch, a ninth switch, a tenth switch, a transformer, a second capacitor, a third capacitor, a fourth capacitor, and a second inductor, wherein
the fifth switch and the sixth switch are connected in series on a branch, the seventh switch and the eighth switch are connected in series on a branch, and the branch on which the fifth switch and the sixth switch are located and the branch on which the seventh switch and the eighth switch are located are connected in parallel;
a node between the fifth switch and the sixth switch is coupled to one port of a primary-side winding of the transformer, and a node between the seventh switch and the eighth switch is coupled to the other port of the primary-side winding of the transformer;
the ninth switch and the tenth switch are connected in series on a branch, the third capacitor and the fourth capacitor are connected in series on a branch, and the branch on which the ninth switch and the tenth switch are located and the branch on which the third capacitor and the fourth capacitor are located are connected in parallel; and
a node between the ninth switch and the tenth switch is coupled to one port of a secondary-side winding of the transformer by using the second capacitor and the second inductor in sequence; and a node between the third capacitor and the fourth capacitor is coupled to the other port of the secondary-side winding of the transformer.

5. The power distribution circuit of the uninterruptible power supply according to claim 3 or 4, wherein the inverter/rectifier circuit comprises: an eleventh switch, a twelfth switch, a thirteenth switch, a fourteenth switch, a third inductor, and a fifth capacitor, wherein
the eleventh switch and the twelfth switch are connected in series on a branch, the thirteenth switch and the fourteenth switch are connected in series on a branch, and the branch on which the eleventh switch and the twelfth switch are located and the branch on which the thirteenth switch and the fourteenth switch are located are connected in parallel; and
a node between the eleventh switch and the twelfth switch is coupled to one port of the second port by using the third inductor, a node between the thirteenth switch and the fourteenth switch is coupled to the other port of the second port, and the fifth capacitor is electrically connected between the node between the thirteenth switch and the fourteenth switch and the third inductor.

6. The power distribution circuit of the uninterruptible power supply according to any one of claims 1 to 5, wherein the compensation voltage is a difference between the rated voltage of the load of the second port and the voltage of the alternating current input by the first port.

7. The power distribution circuit of the uninterruptible power supply according to any one of claims 1 to 6, wherein the power distribution circuit of the uninterruptible power supply further comprises a plurality of electromagnetic compatibility circuits, and
the plurality of electromagnetic compatibility circuits are respectively coupled to the first port, the second port, and the third port, and are configured to isolate an electromagnetic signal between the power distribution circuit of the uninterruptible power supply and another circuit or device.

8. The power distribution circuit of the uninterruptible power supply according to any one of claims 1 to 7, wherein the third port is further coupled to the load, and is configured to supply power to the load.

9. The power distribution circuit of the uninterruptible power supply according to any one of claims 1 to 8, wherein the power distribution circuit of the uninterruptible power supply further comprises a control unit, wherein
the control unit is electrically connected to the switch circuit, the compensation circuit, and the converting circuit, and is configured to: detect a state of the switch circuit; and
send a first control signal to the converting circuit when the switch circuit is in a first state, wherein the first state is a state in which the switch circuit enables the first port to be connected to the second port, and the first control signal indicates the converting circuit to convert the alternating current input by the first port into the direct current.

10. The power distribution circuit of the uninterruptible power supply according to any one of claims 1 to 9, wherein the power distribution circuit of the uninterruptible power supply further comprises the control unit, wherein
the control unit is further configured to send a second control signal to the compensation circuit when the voltage of the alternating current input by the first port is less than the rated voltage of the load of the second port, wherein the second control signal indicates the compensation circuit to convert the direct current input by the third port into the alternating current.

11. The power distribution circuit of the uninterruptible power supply according to any one of claims 1 to 10, wherein the power distribution circuit of the uninterruptible power supply further comprises the control unit, wherein
the control unit is further configured to send a third control signal to the converting circuit when the switch circuit is in a second state, wherein the second state is a state in which the switch circuit enables the first port to be disconnected from the second port, and the third control signal indicates the converting circuit to convert the direct current input by the third port into the alternating current.

12. A power supply system, comprising:
at least one power distribution circuit of the uninterruptible power supply according to any one of claims 1 to 11,
an alternating current power supply, coupled to the first port in the power distribution circuit of the uninterruptible power supply, and configured to provide an alternating current;
a direct current power supply, coupled to the third port in the power distribution circuit of the uninterruptible power supply, and configured to provide a direct current or receive a direct current; and
at least one load, coupled to the second port of the power distribution circuit of the uninterruptible power supply, and configured to receive an alternating current.

13. The power supply system according to claim 12, wherein the compensation circuit comprises a first switch, a second switch, a third switch, a fourth switch, a first inductor, and a first capacitor, wherein
the first switch and the second switch are connected in series on a branch, the third switch and the fourth switch are connected in series on a branch, and the branch on which the first switch and the second switch are located and the branch on which the third switch and the fourth switch are located are connected in parallel on two terminals of the third port; and
a node between the first switch and the second switch is coupled to one terminal of the switch circuit by using the first inductor, a node between the third switch and the fourth switch is coupled to the other terminal of the switch circuit, and the first capacitor is electrically connected to two terminals of the switch circuit.

14. The power supply system according to claim 12 or 13, wherein the converting circuit comprises an LLC bidirectional converting circuit and an inverter/rectifier circuit, wherein
one terminal of the LLC bidirectional converting circuit is coupled to the third port, and the other terminal is coupled to one terminal of the inverter/rectifier circuit, and the LLC bidirectional converting circuit is configured to convert a direct current into a direct current with a specified voltage; and
the other terminal of the inverter/rectifier circuit is coupled to the second port, and the inverter/rectifier circuit is configured to perform conversion between a direct current and an alternating current.

15. The power supply system according to claim 13, wherein the LLC bidirectional converting circuit comprises: a fifth switch, a sixth switch, a seventh switch, an eighth switch, a ninth switch, a tenth switch, a transformer, a second capacitor, a third capacitor, a fourth capacitor, and a second inductor, wherein
the fifth switch and the sixth switch are connected in series on a branch, the seventh switch and the eighth switch are connected in series on a branch, and the branch on which the fifth switch and the sixth switch are located and the branch on which the seventh switch and the eighth switch are located are connected in parallel;
a node between the fifth switch and the sixth switch is coupled to one port of a primary-side winding of the transformer, and a node between the seventh switch and the eighth switch is coupled to the other port of the primary-side winding of the transformer;
the ninth switch and the tenth switch are connected in series on a branch, the third capacitor and the fourth capacitor are connected in series on a branch, and the branch on which the ninth switch and the tenth switch are located and the branch on which the third capacitor and the fourth capacitor are located are connected in parallel; and
a node between the ninth switch and the tenth switch is coupled to one port of a secondary-side winding of the transformer by using the second capacitor and the second inductor in sequence; and a node between the third capacitor and the fourth capacitor is coupled to the other port of the secondary-side winding of the transformer.
